# EUROPÄISCHE PATENTSCHRIFT

(11) **EP 3 994 967 B1**
(45) Veröffentlichungstag und Bekanntmachung des Hinweises auf die Patenterteilung: **23.04.2025**
(21) Anmeldenummer: 21203746.9
(22) Anmeldetag: 20.10.2021
(51) Int. Cl.: G05D 1/00

(54) **LANDWIRTSCHAFTLICHES FAHRZEUG MIT FAHRBEWEGUNGSSYSTEM UND VERFAHREN ZUM STEUERN UND/ODER REGELN EINES FAHRBEWEGUNGSSYSTEMS EINES LANDWIRTSCHAFTLICHEN FAHRZEUGS**
AGRICULTURAL VEHICLE WITH DRIVING SYSTEM AND METHOD FOR CONTROLLING AND / OR REGULATING A DRIVING SYSTEM OF AN AGRICULTURAL VEHICLE
VÉHICULE AGRICOLE POURVU DE SYSTÈME DE DÉPLACEMENT ET PROCÉDÉ DE COMMANDE ET/OU DE RÉGULATION D'UN SYSTÈME DE DÉPLACEMENT D'UN VÉHICULE AGRICOLE

(30) Priorität: 10.11.2020 DE 102020129552
(43) Veröffentlichungstag der Anmeldung: 11.05.2022
(73) Patentinhaber: HORSCH LEEB Application Systems GmbH, 94405 Landau an der Isar (DE)
(72) Erfinder: Leeb, Theodor, 94405 Landau an der Isar (DE)
(74) Vertreter: v. Bezold & Partner Patentanwälte - PartG mbB

(56) Entgegenhaltungen:
- CN-A- 108 135 122
- DE-A1- 102018 108 025
- US-A1- 2011 231 061
- US-A1- 2015 142 250
- US-B2- 10 512 203

## Beschreibung

Die Erfindung betrifft ein landwirtschaftliches Fahrzeug, vorzugsweise ein autonomes landwirtschaftliches Fahrzeug, mit einem Fahrbewegungssystem. Die Erfindung betrifft zudem ein Verfahren zum Steuern und/oder Regeln eines Fahrbewegungssystems eines landwirtschaftlichen Fahrzeugs, vorzugsweise eines autonomen landwirtschaftlichen Fahrzeugs.

Aus dem Stand der Technik ist durch die WO 2019 193 080 A1 und die DE 10 2018 108 025 A1 bereits ein autonomes landwirtschaftliches Fahrzeug in Form eines autonomen Trägerfahrzeugs bekannt. Das Fahrzeug umfasst eine Steuereinrichtung mit einem Positionsbestimmungssystem, wobei in der Steuereinrichtung positionsabhängige Arbeitsanweisungen, welche mittels eines Planungstools definierbar sind, für bspw. einen Fahrantrieb des Fahrzeugs hinterlegt sind. Die Steuereinrichtung kann zudem mit Umfeldsensorik ausgestattet sein, um somit zudem den Fahrantrieb anhand von Signalen der Umfeldsensorik beeinflussen zu können.

Aus dem Stand der Technik bekannte Sattelitengestützte Positionsbestimmungssysteme, bspw. GPS-Systeme, weisen jedoch Toleranzen von bis zu 0,5 Meter oder mehr auf, was bei positionsabhängigen Arbeitsanweisungen mitunter zu ungewollten und fehlerhaften Arbeitsprozessen führen kann.

Aus der DE 10 2017 130 694 A1 ist zudem eine landwirtschaftliche Arbeitsmaschine mit einer Steuereinrichtung bekannt, wobei die Steuereinrichtung eingerichtet ist, basierend auf einer von einer Erfassungseinrichtung erfassten Kontur einer Bodenfläche eine Reihe einer Reihenkultur zu erfassen und hierauf basierend die Arbeitsmaschine zu lenken und/oder einzustellen. Ein derartiges System setzt jedoch eine dauerhafte Erfassung einer Kontur der Bodenfläche voraus, was jedoch mitunter bei stark kupiertem Gelände nicht oder nur begrenzt möglich ist und was oftmals bei sich ändernden Reihenverläufen, bspw. bei Kurven, zu Problemen führt.

Aufgabe der Erfindung ist es somit, die beschriebenen Nachteile des Standes der Technik zu beseitigen. Insbesondere soll ein landwirtschaftliches Fahrzeug geschaffen werden, mit dem positionsgenaue Arbeitsprozesse jederzeit durchgeführt werden können.

Diese Aufgaben werden gelöst durch ein landwirtschaftliches Fahrzeug mit den Merkmalen des unabhängigen Anspruch 1, sowie durch ein Verfahren zum Steuern und/oder Regeln eines Fahrbewegungssystems eines landwirtschaftlichen Fahrzeug mit den Merkmalen des Verfahrensanspruch 15. Vorteilhafte Weiterbildungen der Erfindung sind in den Ansprüchen und der folgenden Beschreibung unter teilweiser Bezugnahme auf die Figuren offenbart.

Die Erfindung betrifft ein landwirtschaftliches Fahrzeug, vorzugsweise autonomes landwirtschaftliches Fahrzeug.

Das erfindungsgemäße landwirtschaftliche Fahrzeug umfasst zumindest ein Chassis mit einem Fahrwerk, welches mit einem Fahrbewegungssystem zur vorzugsweisen Vorgabe von Fahrgeschwindigkeiten und/oder von Lenkbewegungen gekoppelt (z.B. wirktechnisch verbunden) ist. Zudem umfasst das landwirtschaftliche Fahrzeug zumindest eine Steuereinrichtung zur Bereitstellung (z.B. Berechnung, Generierung, oder dergl.) von Steuer- und/oder Regelsignalen für das Fahrbewegungssystem.

Zudem umfasst das erfindungsgemäße landwirtschaftliche Fahrzeug zumindest eine erste Sensoreinrichtung, welche zur Erfassung von dem Fahrzeug vorgelagerten Objekten (z.B. Personen, Hindernisse und/oder dergl.) eingerichtet ist, sowie zumindest eine zweite Sensoreinrichtung, welche zur Erfassung von wenigstens einer Reihe eines Pflanzenbestand (z.B. Getreide, Mais, Zuckerrüben und/oder dergl.) eingerichtet ist.

Um ein landwirtschaftliches Fahrzeug zu schaffen, mit dem positionsgenaue Arbeitsprozesse jederzeit durchgeführt werden können ist erfindungsgemäß vorgesehen, dass die Steuereinrichtung eingerichtet ist, Steuer- und/oder Regelsignale für das Fahrbewegungssystem vorrangig von Signalen der ersten Sensoreinrichtung zu Signalen der zweiten Sensoreinrichtung bereitzustellen.

Die Erfindung macht sich die Erkenntnis zu Nutze, dass wenigstens zwei Sensoreinrichtungen mittels einer Steuereinrichtung wahlweise vorrangig zur Bereitstellung von Steuer- und/oder Regelsignalen herangezogen werden können und somit jeweils die Sensoreinrichtung (das heißt die Signale) mit einer ausreichenden oder korrekten oder geforderten Signalstärke bevorzugt zur Bereitstellung von Steuer- und/oder Regelsignalen von der Steuereinrichtung herangezogen wird.

Infolge der Erfindungsgemäßen Maßnahmen wird demnach ein landwirtschaftliches Fahrzeug geschaffen, welches mit einfachen Mitteln eine wesentlich exaktere Durchführung von Arbeitsprozessen ermöglicht, insbesondere eine wesentlich genauere Bearbeitung von Reihen eines Pflanzenbestand, wie bspw. einer Reihenkultur, ermöglicht.

Das erfindungsgemäße landwirtschaftliche Fahrzeug, kann ein vorzugsweise autonomes (z.B. vollautonom oder teilautonom) landwirtschaftliches Trägerfahrzeug sein, an welchem landwirtschaftliche Arbeitswerkzeuge angebaut werden können, das heißt mit dem Arbeitswerkzeuge gekoppelt werden können. Das landwirtschaftliche Fahrzeug kann gemäß einer alternativen oder ergänzenden Ausführungsvariante auch ein vorzugsweise autonomes (z.B. vollautonom oder teilautonom) landwirtschaftliches Zugfahrzeug sein, mittels welchem landwirtschaftliche Arbeitswerkzeuge (z.B. Arbeitsmaschinen) gezogen werden können, insbesondere entlang einer landwirtschaftlichen Fläche gezogen werden können.

Es sei darauf hingewiesen, dass eine Vorgabe von Fahrgeschwindigkeiten mittels des Fahrbewegungssystems einen festen Geschwindigkeitswert oder einen Geschwindigkeitsbereich umfassen kann, sowie auch eine Beschleunigung oder Verzögerung umfassen kann. Zudem umfasst die Vorgabe einer Fahrgeschwindigkeit auch eine Fahrgeschwindigkeit von 0 km/h, was dementsprechend einem Stillsetzen oder Stillstand entspricht.

Zudem sei darauf hingewiesen, dass eine Vorgabe von Lenkbewegungen mittels des Fahrbewegungssystems eine Bewegung des Fahrzeugs entlang wenigstens einer Reihe eines Pflanzenbestand umfassen kann, alternativ oder ergänzend auch eine Bewegung des Fahrzeugs entlang einer festgelegten Route (z.B. Fahrspur, Fahrgasse) umfassen kann. Auch können Lenkbewegungen durch eine Bewegung entlang einer, mittels bspw. eines Planungstool (z.B. Routenplanungsprogramm), festgelegter Routen umfasst sein.

Das Chassis ist zweckmäßig ein Fahrgestell mit einem daran angebrachten Fahrwerk. Wobei das Fahrwerk durch Räder, Raupenfahrwerke oder dergl. gebildet sein kann, welche zudem an einer oder mehreren Achsen angebracht sein können. Zumindest ein Rad und/oder ein Raupenfahrwerk und/oder eine Achse kann darüber hinaus durch Vorgabe von Lenkbewegungen lenkbar sein, bspw. mittels zumindest eines Lenkaktor (z.B. Lenkzylinder) lenkbar sein.

Das Fahrbewegungssystem kann zur Vorgabe von Lenkbewegungen zweckmäßig lenkbare Achsschenkel, Spurstangen, Lenkgetriebe, Lenksäulen und/oder dergl. umfassen und zweckmäßig insbesondere zumindest einen Lenkaktor (z.B. Lenkzylinder) umfassen.

Die Reihe eines Pflanzenbestands kann bspw. durch Saatkörner definiert sein und/oder durch Pflanzen definiert sein, durch Bodenstrukturen (z.B. Dämme) und/oder durch von im Positionsbestimmungssystem bereitgestellter Daten und/oder mittels einem Planungstool bereitgestellter Daten, definiert sein.

Im Kontext der Erfindung umfasst ein Bereitstellen oder Vorgeben insbesondere ein Berechnen, Generieren, Ermitteln und/oder dergl.

Eine vorrangiges heranziehen von Signalen kann bspw. durch eine Zuordnung einer höheren Priorität und/oder einer relevanteren Priorität erfolgen. Wobei die Prioritäten in der Steuereinrichtung hinterlegt sein können.

Das Fahrbewegungssystem kann zur Vorgabe von Fahrgeschwindigkeiten zweckmäßig zumindest einen Motor (z.B. Elektromotor, Hydraulikmotor, Verbrennungsmotor und/oder dergl.) mit einem Antriebsstrang umfassen. Ein Motor kann bspw. auch einem Rad oder einem Raupenfahrwerk zugeordnet sein und bspw. als Radnabenmotor ausgeführt sein. Auch mehreren Rädern oder Raupenfahrwerken können jeweils Motoren zugeordnet sein oder wirktechnisch mit diesen gekoppelt sein.

Erfindungsgemäß weist das landwirtschaftliche Fahrzeug zumindest eine dritte Sensoreinrichtung auf, welche zur Erfassung einer Ist-Position (z.B. der tatsächlichen aktuellen Position und/oder Lage) und/oder zur Vorgabe einer Soll-Position (z.B. der geforderten aktuellen Position) des Fahrzeuges auf einer landwirtschaftlichen Fläche eingerichtet ist und wobei die Steuereinrichtung eingerichtet ist, Steuer- und/oder Regelsignale für das Fahrbewegungssystem vorrangig von Signalen der ersten Sensoreinrichtung und von Signalen der zweiten Sensoreinrichtung zu Signalen der dritten Sensoreinrichtung bereitzustellen.

Mittels der dritten Sensoreinrichtung kann zweckmäßig insbesondere eine Kontrolle erfolgen, ob eine Ist-Position einer geforderten Position, das heißt einer Soll-Position zumindest annähernd entspricht. Alternativ oder ergänzend kann eine Bewegung des Fahrzeugs, wenn bspw. weder die erste Sensoreinrichtung noch die zweite Sensoreinrichtung ein entsprechendes, zur Verwendung geeignetes, Signal liefert, anhand der Signale der dritten Sensoreinrichtung erfolgen.

Die Steuereinrichtung kann optional oder ergänzend zudem dazu eingerichtet sein, Steuer- und/oder Regelsignale für das Fahrbewegungssystem vorrangig von Signalen der zweiten Sensoreinrichtung zu Signalen der dritten Sensoreinrichtung bereitzustellen und/oder vorrangig von Signalen der ersten Sensoreinrichtung zu Signalen der dritten Sensoreinrichtung bereitzustellen.

Erfindungsgemäß wird somit bspw. erreicht, dass Bewegungen des Fahrzeugs bevorzugt anhand der Signale der zweiten Sensoreinrichtung (z.B. entlang der Reihe eines Pflanzenbestand) erfolgt, jedoch nur solange ein ausreichend starkes, oder erforderliches Signal vorhanden ist, ist dies nicht der Fall erfolgen Bewegungen des Fahrzeugs anhand von Signalen der dritten Sensoreinrichtung (z.B. am Vorgewende, bei Kurvenfahrten oder dergl.). Wird mittels der ersten Sensoreirichtung jedoch ein sich im Bewegungsbereich des Fahrzeug befindendes Objekt (z.B. Person) erfasst, erfolgt unabhängig von Signalen der zweiten Sensoreinrichtung und der dritten Sensoreinrichtung eine Bereitstellung von Steuer- und/oder Regelsignalen für das Fahrbewegungssystem anhand der Signale der ersten Sensoreinrichtung (z.B. somit ein Stillsetzen).

Um einen störungsfreien Betrieb des landwirtschaftlichen Fahrzeug zu ermöglichen, ist es gemäß einer Weiterbildung der Erfindung möglich, dass die Steuereinrichtung eingerichtet ist, einen Wechsel der für die Bereitstellung verwendeten Signale der Sensoreinrichtungen, vorzugsweise der ersten Sensoreinrichtung, der zweiten Sensoreinrichtung und/oder der dritten Sensoreinrichtung, automatisiert auszuführen.

Ein automatisiertes Ausführen kann gemäß einer Weiterbildung der Erfindung auf verschiedenste Art und weise erfolgen, zweckmäßig anhand eines mittels der Steuereinrichtung durchgeführten Vergleich von, vorzugsweise mittels der ersten Sensoreinrichtung und/oder der zweiten Sensoreinrichtung, erfassten Ist-Signalen mit Soll-Signalen, und/oder von, vorzugsweise mittels der dritten Sensoreinrichtung, erfassten Ist-Positionen mit Soll-Positionen.

Eine bevorzugte Ausführungsvariante der Erfindung kann vorsehen, dass in der Steuereinrichtung Soll-Signale für die erste Sensoreinrichtung und/oder Soll-Signale für die zweite Sensoreinrichtung und/oder Soll-Positionen für die dritte Sensoreinrichtung hinterlegt und/oder hinterlegbar sind, wobei die Soll-Signale und/oder Soll-Positionen auch jeweils Signalbereiche und Positionsbereiche umfassen können und/oder Schwellenwerte für Signale oder Positionen umfassen können.

Es ist möglich, dass für Soll-Signale und/oder Soll-Positionen Schwellenwerte hinterlegt und/oder hinterlegbar sein können und ein Wechsel der für die Bereitstellung verwendeten Signale der Sensoreinrichtungen, vorzugsweise der ersten Sensoreinrichtung, der zweiten Sensoreinrichtung und/oder der dritten Sensoreinrichtung, durch ein Überschreiten und/oder Unterschreiten der Schwellenwerte initiiert wird.

Gemäß einer alternativen oder ergänzenden Ausführungsvariante der Erfindung kann vorgesehen sein, dass die Steuereinrichtung eingerichtet ist, Steuer- und/oder Regelsignale für das Fahrbewegungssystem derartig bereitzustellen, dass durch von Soll-Signalen abweichende Ist-Signale der ersten Sensoreinrichtung unabhängig von Ist-Signalen der zweiten Sensoreinrichtung und von Ist-Positionen der dritten Sensoreinrichtung ein Stillstand des Fahrzeugs initiiert wird.

Gemäß einer alternativen oder ergänzenden Ausführungsvariante der Erfindung kann vorgesehen sein, dass die Steuereinrichtung eingerichtet ist, Steuer- und/oder Regelsignale für das Fahrbewegungssystem derartig bereitzustellen, dass durch von Soll-Signalen abweichende Ist-Signale der zweiten Sensoreinrichtung Fahrgeschwindigkeiten und Lenkbewegungen anhand von Ist-Positionen und/oder Soll-Positionen der dritten Sensoreinrichtung initiiert werden, insbesondere anhand von durch ein Planungstool bereitgestellten Arbeitsanweisungen initiiert werden.

Das Planungstool kann bspw. ein aus dem Stand der Technik bekannten Routenplanungstool sein, mittels welchem Arbeitsanweisungen (z.B. Routen) für das Fahrzeug und/oder dessen Arbeitswerkzeuge vorgegeben und geplant werden können.

Gemäß einer alternativen oder ergänzenden Ausführungsvariante der Erfindung kann vorgesehen sein, dass die Steuereinrichtung eingerichtet ist, Steuer- und/oder Regelsignale für das Fahrbewegungssystem derartig bereitzustellen, dass vorzugsweise unabhängig von Ist-Signalen und/oder Soll-Signalen der zweiten Sensoreinrichtung, durch von Soll-Positionen abweichende Ist-Positionen der dritten Sensoreinrichtung ein Stillstand des Fahrzeugs initiiert wird. Dies kann bspw. der Fall sein, wenn zwar die zweite Sensoreinrichtung eine Reihe eines Pflanzenbestand erfasst jedoch die Position der Reihe nicht mit einer Soll-Position des Fahrzeug übereinstimmt. Dies kann bspw. der Fall sein, wenn sich das Fahrzeug in einer "falschen" Reihe befindet.

Zur Durchführung von landwirtschaftlichen Prozessen ist es gemäß einer bevorzugten Ausführungsform möglich, dass das landwirtschaftliche Fahrzeug mit Arbeitswerkzeugen (z.B. Spritzdüsen, Verteildüsen, Bodenbearbeitungswerkzeuge, Säschare, Dosiersystem und/oder dergl.) gekoppelt ist, welche mittels einer Stelleinrichtung (z.B. ein oder mehrere Zylinder, Antriebe, Ventile und/oder dergl.) aktivierbar (z.B. einschalten), deaktivierbar (z.B. ausschalten) und/oder parametrisierbar (z.B. Vorgabe von Frequenzen) sind, wobei die Steuereinrichtung eingerichtet ist, Steuer- und/oder Regelsignale zur Aktivierung, Deaktivierung und/oder Parametrisierung für die Stelleinrichtung bereitzustellen.

Es sei darauf hingewiesen, dass im Kontext der Erfindung unter die Definition von Arbeitswerkzeugen auch landwirtschaftliche Arbeitsmaschinen subsummierbar sind.

Gemäß einer alternativen oder ergänzenden Ausführungsvariante der Erfindung kann vorgesehen sein, dass die Steuereinrichtung eingerichtet ist, Steuer- und/oder Regelsignale zur Aktivierung der Stelleinrichtung ausschließlich bereitzustellen, wenn eine Bereitstellung von Steuer- und/oder Regelsignalen für das Fahrbewegungssystem anhand von Signalen der zweiten Sensoreinrichtung erfolgt und Steuer- und/oder Regelsignale zur Deaktivierung der Stelleinrichtung bereitzustellen, wenn eine Bereitstellung von Steuer- und/oder Regelsignalen für das Fahrbewegungssystem anhand von Signalen der ersten Sensoreinrichtung und/oder der dritten Sensoreinrichtung erfolgt. Somit werden bspw. Arbeitswerkzeuge nur aktiviert wenn sich diese im Bereich einer Reihe eines Pflanzenbestand befinden.

Eine bevorzugte Ausführungsvariante der Erfindung kann vorsehen, dass das landwirtschaftliche Fahrzeug zumindest eine vierte Sensoreinrichtung aufweist, welche vorzugsweise zur Erfassung der Funktion (z.B. einer Position, einer Lage, einer Geschwindigkeit, und/oder dergl.) der Arbeitswerkzeuge und/oder der Stelleinrichtung eingerichtet ist.

Zur Erreichung einer möglichst großen Schlagkraft mittels dem landwirtschaftlichen Fahrzeug ist es gemäß einer Weiterbildung der Erfindung möglich, dass die Steuereinrichtung eingerichtet ist, Steuer- und/oder Regelsignale für das Fahrbewegungssystem in einem ersten Betriebsmodus vorrangig von Signalen der vierten Sensoreinrichtung zu Signalen der zweiten Sensoreinrichtung und der dritten Sensoreinrichtung bereitzustellen und/oder in einem zweiten Betriebsmodus, vorranging von Signalen der ersten Sensoreinrichtung und/oder der zweiten Sensoreinrichtung und/oder der dritten Sensoreinrichtung zu Signalen der vierten Sensoreinrichtung bereitzustellen. Somit ist es bspw. möglich, dass Anhand der Signale der vierten Sensoreinrichtung bspw. eine Fahrgeschwindigkeit vorgegeben wird, insbesondere eine maximal mögliche Fahrgeschwindigkeit vorgegeben wird. Wobei es im ersten Betriebsmodus auch denkbar ist, dass das Fahrzeug in einem Fahrgeschwindigkeitsbereich bewegt wird und innerhalb dieses die Fahrgeschwindigkeit anhand der Signale der vierten Sensoreinrichtung angepasst wird.

Ein Wechsel des ersten Betriebsmodus in den zweiten Betriebsmodus kann mittels der Steuereinrichtung initiiert werden, bspw. durch von Soll-Signalen abweichende Ist-Signale der ersten Sensoreinrichtung und/oder durch von Soll-Signalen abweichende Ist-Signale der zweiten Sensoreinrichtung und/oder durch von Soll-Positionen abweichende Ist-Positionen der dritten Sensoreinrichtung. Dies Bedeutet, solange jeweils Soll-Signale und/oder Ist-Positionen erfasst werden, kann bspw. eine Fahrgeschwindigkeit basierend auf Signalen der vierten Sensoreinrichtung bereitgestellt werden, sobald jedoch eine Abweichung eines Soll-Signal und/oder einer Soll-Position erfasst wird, werden diese Signale vorrangig zur Bereitstellung von Steuer- und/oder Regelsignale für das Fahrbewegungssystem herangezogen.

Um gefahrbringende Bewegungen, die bspw. mittels des Fahrbewegungssystems ausgelöst werden können zu verhindern, ist es möglich, dass die Steuereinrichtung mit einer Not-Halt-Einrichtung (z.B. Not-Aus-Schalter) gekoppelt ist, wobei die Steuereinrichtung eingerichtet ist, Steuer- und/oder Regelsignale für das Fahrbewegungssystem vorranging von Signalen der Not-Halt-Einrichtung zu Signalen der Sensoreinrichtungen bereitzustellen, vorzugsweise vorrangig von Signalen der Not-Halt-Einrichtung zu Signalen der ersten Sensoreinrichtung, der zweiten Sensoreinrichtung und/oder der dritten Sensoreinrichtung, bereitzustellen. Wobei es alternativ oder ergänzend auch denkbar wäre, dass die Steuereinrichtung eingerichtet ist, Steuer- und/oder Regelsignale für das Fahrbewegungssystem vorranging von Signalen der Not-Halt-Einrichtung zu Signalen der vierten Sensoreinrichtung bereitzustellen

Die Sensoreinrichtungen können jeweils durch eine oder mehrere Erfassungsmittel, Messmittel, Sensoren, Kameras und/oder dergl. gebildet sein.

Die erste Sensoreinrichtung kann zweckmäßig durch eine Umfeldsensorik gebildet sein. Die Umfeldsensorik kann insbesondere zur Objekterkennung, respektive Objekterfassung eingerichtet sein, bspw. zur Hinderniserkennung, Personenerkennung, Tiererkennung und/oder dergl. eingerichtet sein und bspw. durch einen oder mehrere Radarsensor(en), Lidarsensor(en), Kameras und/oder dergl. gebildet sein. Die erste Sensoreinrichtung kann somit eine Umfeldsensorik bilden.

Die erste Sensoreinrichtung kann insbesondere einen sich über die Gesamte Arbeitsbreite des Fahrzeugs erstreckenden Erfassungsbereich aufweisen.

Die zweite Sensoreinrichtung kann zweckmäßig durch eine Sensorik zur Erfassung von wenigstens einer Reihe eines Pflanzenbestand gebildet sein, bspw. durch eine oder mehrere Kameras, Laserscanner und/oder dergl. Zweckmäßig kann die zweite Sensoreinrichtung auch zur Erfassung von Saatkörnern, welche bspw. mit Erde bedeckt sind eingerichtet sein.

Die dritte Sensoreinrichtung kann zweckmäßig durch ein Positionsbestimmungssystem gebildet sein. Bspw. durch ein Satellitengestütztes Positionsbestimmungssystem (z.B. GPS-System) gebildet sein und/oder durch ein Geofencing-System gebildet sein.

Eine Erfassung mittels der Sensoreinrichtungen kann online durch am Fahrzeug angebrachte Sensoren erfolgen. Eine Erfassung mittels der Sensoreinrichtung kann alternativ oder ergänzend jedoch auch offline erfolgen, bspw. mittels an einem Fluggerät (z.B. Drohne) angebrachter Sensoren.

Es ist möglich, dass dem Fahrzeug noch weitere Sensoreinrichtungen zugeordnet sind, und/oder das der ersten Sensoreinrichtung, der zweiten Sensoreinrichtung, der dritten Sensoreinrichtung und/oder der vierten Sensoreinrichtung noch weitere Sensoren zugeordnet und/oder zuordbar sind.

Erfindungsgemäß ist es insbesondere möglich, dass die Steuereinrichtung eingerichtet ist, zur Bereitstellung von Steuer- und/oder Regelsignalen jeweils die Signale der Sensoreinrichtung (z.B. der zweiten Sensoreinrichtung und/oder der dritten Sensoreinrichtung) heranzuziehen, mittels der eine möglichst exakte Bewegung des Fahrzeugs erreicht werden kann, bspw. vorranging anhand von Reihen eines Pflanzenbestand (und somit der zweiten Sensoreinrichtung) gegenüber einem Positionsbestimmungssystem (und somit der dritten Sensoreinrichtung). Wobei unabhängig von den Signalen der Reihen eines Pflanzenbestand (und somit der zweiten Sensoreinrichtung) und einem Positionsbestimmungssystem (und somit der dritten Sensoreinrichtung) bei einer Erfassung eines Objekts im Bewegungsbereich des Fahrzeugs eine Bereitstellung der Steuer- und/oder Regelsignale für das Fahrbewegungssystem vorrangig anhand des erfassten Objekt (und somit der ersten Sensoreinrichtung) erfolgt.

Es ist zudem möglich, dass das Fahrzeug und/oder die Steuereinrichtung mit einer Fernbedienung gekoppelt ist und dass die Steuereinrichtung eingerichtet ist, Steuer- und/oder Regelsignale für das Fahrbewegungssystem anhand der Signale der Fernbedienung bereitzustellen, insbesondere vorrangig zu Signalen der Sensoreinrichtungen bereitzustellen, vorzugsweise vorrangig zu Signalen der ersten Sensoreinrichtung, der zweiten Sensoreinrichtung und/oder der dritten Sensoreinrichtung. Mittels der Fernbedienung können somit zweckmäßig die Sensoreinrichtungen übersteuert werden.

Die Steuereinrichtung weist bspw. eine Rechnereinheit, einen Bordcomputer und/oder dergl. mit einem Steuerungs- und/oder Regelungsprogramm auf und umfasst zudem einen Steuer- und/oder Regelkreis, insbesondere einen hydraulischen und/oder pneumatischen und/oder elektrischen Steuer- und/oder Regelkreis, wobei der Steuer- und/oder Regelkreis zweckmäßig zur hydraulischen und/oder pneumatischen und/oder elektrischen Signal- und/oder Befehlsübertragung ausgebildet ist. Welche Signal- und/oder Befehlsübertragung auch drahtlos (z.B. mittels WLAN) erfolgen kann.

Im Kontext der Erfindung umfasst der Begriff der Steuereinrichtung, insbesondere die Gesamtheit der Bauteile zur Signal- und/oder Befehlsübertragung. Dementsprechend auch Rechnereinheiten, CPU's und/oder dergl. Ebenso umfasst sind entsprechend auch in den jeweiligen Sensoren oder Sensoreinheiten oder Sensoranordnungen integrierte Steuereinrichtungen. Ebenso sei darauf hingewiesen, dass die Signale und/oder Daten der Sensoren / Messeinrichtungen / Erfassungseinrichtungen und/oder dergl. jeweils als Rückkoppelung für eine Steuer- und/oder Regelgröße herangezogen werden können.

Es sei noch darauf hingewiesen, dass die Begriffe "Steuern" und "Regeln" und "Steuereinrichtung" und "Regelungseinrichtung" sich auf elektronische und/oder pneumatische und/oder hydraulische Steuerungen oder Regelungen beziehen können, die je nach Ausbildung Steuerungsaufgaben und/oder Regelungsaufgaben übernehmen können. Auch wenn hierin der Begriff "Steuern" verwendet wird, kann damit gleichsam zweckmäßig auch "Regeln" umfasst sein. Ebenso kann bei Verwendung des Begriffs "Regeln" gleichsam auch ein "Steuern" damit umfasst sein.

Die Erfindung umfasst zur Lösung der Aufgaben zudem ein Verfahren zum Steuern und/oder Regeln eines Fahrbewegungssystems eines landwirtschaftlichen Fahrzeugs, vorzugsweise eines autonomen landwirtschaftlichen Fahrzeugs.

Das Fahrzeug umfasst ein Chassis mit einem Fahrwerk, welches mit einem Fahrbewegungssystem zur vorzugsweisen Vorgabe von Fahrgeschwindigkeiten und von Lenkbewegungen gekoppelt ist. Zudem umfasst das Fahrzeug eine Steuereinrichtung zur Bereitstellung von Steuer- und/oder Regelsignalen für das Fahrbewegungssystem.

Des Weiteren umfasst das Fahrzeug zumindest eine erste Sensoreinrichtung, welche vorzugsweise zur Erfassung von dem Fahrzeug vorgelagerten Objekten eingerichtet ist, und zumindest eine zweite Sensoreinrichtung, welche vorzugsweise zur Erfassung von wenigstens einer Reihe eines Pflanzenbestand eingerichtet ist.

Das erfindungsgemäße Verfahren ist gekennzeichnet durch, ein Bereitstellen von Steuer- und/oder Regelsignalen für das Fahrbewegungssystem vorrangig von Signalen der ersten Sensoreinrichtung zu Signalen der zweiten Sensoreinrichtung.

Erfindungsgemäß weist das landwirtschaftliche Fahrzeug zumindest eine dritte Sensoreinrichtung auf, welche vorzugsweise zur Erfassung einer Ist-Position und/oder zur Vorgabe einer Soll-Position des Fahrzeug auf einer landwirtschaftlichen Fläche eingerichtet ist, wobei die Steuereinrichtung eingerichtet ist, Steuer- und/oder Regelsignale für das Fahrbewegungssystem vorrangig von Signalen der ersten Sensoreinrichtung und von Signalen der zweiten Sensoreinrichtung zu Signalen der dritten Sensoreinrichtung bereitzustellen. Ferner kann die Steuereinrichtung eingerichtet sein, Steuer- und/oder Regelsignale für das Fahrbewegungssystem vorrangig von Signalen der zweiten Sensoreinrichtung zu Signalen der dritten Sensoreinrichtung bereitzustellen und/oder vorrangig von Signalen der ersten Sensoreinrichtung zu Signalen der dritten Sensoreinrichtung bereitzustellen.

Gemäß einer Weiterbildung des Verfahren ist es möglich, dass das landwirtschaftliche Fahrzeug mit Arbeitswerkzeugen gekoppelt ist, welche mittels einer Stelleinrichtung aktvierbar, deaktivierbar und/oder parametrisierbar sind, wobei die Steuereinrichtung eingerichtet ist, Steuer- und/oder Regelsignale zur Aktivierung, Deaktivierung und/oder Parametrisierung für die Stelleinrichtung bereitzustellen und wobei die Steuereinrichtung eingerichtet ist, Steuer- und/oder Regelsignale zur Aktivierung der Stelleinrichtung ausschließlich bereitzustellen, wenn eine Bereitstellung von Steuer- und/oder Regelsignalen für das Fahrbewegungssystem anhand von Signalen der zweiten Sensoreinrichtung erfolgt und Steuer- und/oder Regelsignale zur Deaktivierung der Stelleinrichtung bereitzustellen, wenn eine Bereitstellung von Steuer- und/oder Regelsignalen für das Fahrbewegungssystem anhand von Signalen der ersten Sensoreinrichtung und/oder der dritten Sensoreinrichtung erfolgt.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1: eine Perspektivansicht einer stark vereinfacht dargestellten Ausführungsvariante eines landwirtschaftlichen Fahrzeugs,
- Figur 2A: eine Draufsicht einer stark vereinfacht dargestellten Ausführungsvariante eines landwirtschaftlichen Fahrzeugs mit gerade gestellten Rädern,
- Figur 2B: eine Draufsicht eines landwirtschaftlichen Fahrzeugs gemäß der Figur 2A, mit eingelenkten Rädern,
- Figur 3A & 3B: eine Draufsicht auf eine landwirtschaftliche Fläche mit drei auf dieser angeordneten erfindungsgemäßen landwirtschaftlichen Fahrzeugen, welche Fahrbewegungen auf Basis zumindest einer ersten Sensoreinrichtung, einer zweiten Sensoreinrichtung und/oder einer dritten Sensoreinrichtung ausführen.

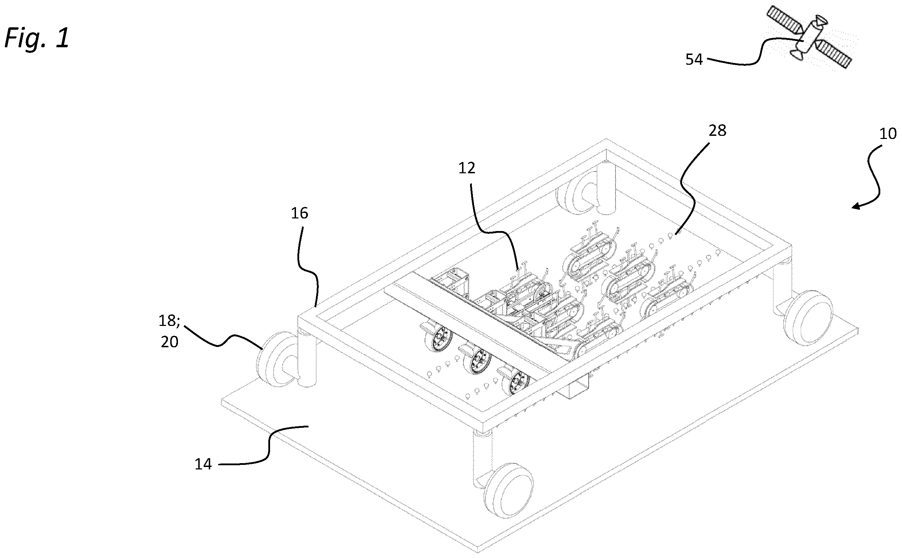

Die in den Figuren 1 bis 3 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden. Die dargestellten Ausführungsformen stellen lediglich Beispiele dar, wie das erfindungsgemäße landwirtschaftliche Fahrzeug und das erfindungsgemäße Verfahren ausgestaltet und ausgeführt sein können und stellen keine abschließende Begrenzung dar.

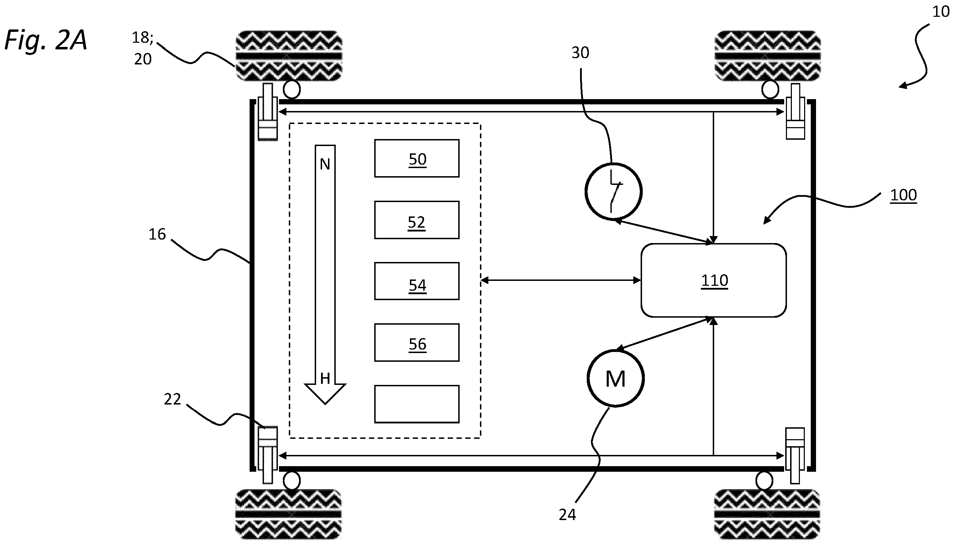

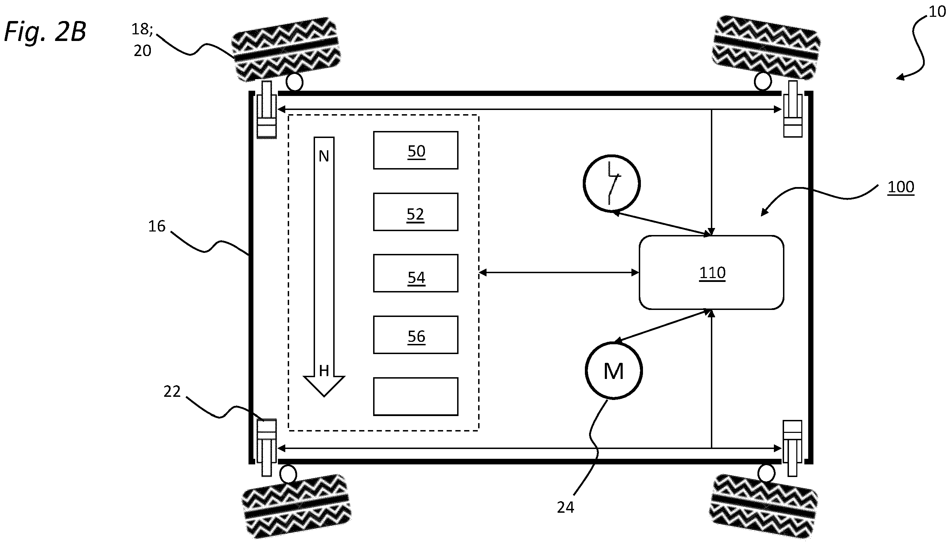

Die Figuren 1 und 2 zeigen unterschiedliche Ansichten von stark vereinfacht dargestellten Ausführungsbeispielen von landwirtschaftlichen Fahrzeugen 10, die unter gemeinsamer Bezugnahme auf die Figuren 1 und 2 beschrieben werden.

Die Figur 1 zeigt hierbei eine Ausführungsvariante eines landwirtschaftlichen Fahrzeugs 10 in einer Perspektivansicht sowie die Figuren 2A und 2B eine Ausführungsvariante eines landwirtschaftlichen Fahrzeugs 10 in einer Draufsicht mit unterschiedlichen Lenkeinschlägen.

Das landwirtschaftliche Fahrzeug 10 ist vorzugsweise als autonomes (z.B. vollautonom oder teilautonom) landwirtschaftliches Fahrzeug 10 ausgeführt. Das Fahrzeug 10 gemäß der Ausführungsbeispiele ist als Trägerfahrzeug ausgeführt, was bedeutet, dass an diesem Arbeitswerkzeuge 12 (z.B. zur Verteilung von Verteilgut, zur Bodenbearbeitung, zur Ernte - gemäß der Figuren 1 und 2 zur Bodenbearbeitung) angebaut sein können. Es wäre jedoch auch denkbar, dass das Fahrzeug 10 ein Zugfahrzeug bildet mittels welchem landwirtschaftliche Arbeitswerkzeuge 12 (z.B. Arbeitsmaschinen zur Verteilung von Verteilgut (bspw. Feldspritzen, Sämaschinen, Düngersteuer), zur Bodenbearbeitung (bspw. Hacken, Striegel, Scheibeneggen, Grubber) , zur Ernte (bspw. Mähwerke, Schneidwerke) und/oder dergl.) entlang einer landwirtschaftlichen Fläche 14 gezogen werden können.

Das Fahrzeug 10 ist unabhängig von der Ausführungsform jeweils zur Durchführung landwirtschaftlicher Prozesse eingerichtet. Bei den Prozessen kann es sich bspw. um Zugarbeiten, Verteilarbeiten, Bodenbearbeitungsarbeiten und/oder dergl. landwirtschaftliche Prozesse handeln. Auch Erntevorgänge wären denkbar.

Das Fahrzeug 10 umfasst ein Chassis 16 mit einem Fahrwerk 18, wobei das Fahrwerk 18 vier Räder 20 umfasst welche gegenüber dem Chassis 16 lenkbar sind (vergl. Figur 2A und 2B). Zur Vorgabe von Fahrgeschwindigkeiten und/oder von Lenkbewegungen umfasst das landwirtschaftliche Fahrzeug 10 ein Fahrbewegungssystem 100, zudem umfasst das Fahrzeug 10 eine Steuereinrichtung 110 zur Bereitstellung von Steuer- und/oder Regelsignalen für das Fahrbewegungssystem 100.

Zur Durchführung von Lenkbewegungen umfasst das Fahrbewegungssystem 100 zudem jeweils mit der Steuereinrichtung 110 und mit den Räder 20 gekoppelte Lenkaktoren 22, bspw. in Form von Lenkzylinder. Auch Lenkgestänge oder dergl. wären denkbar.

Das Fahrbewegungssystem 100 umfasst zudem zur Vorgabe von Fahrgeschwindigkeiten zweckmäßig zumindest einen Motor 24, wobei es auch denkbar wäre das zumindest einigen der Räder 20 Radnabenmotoren zugeordnet sind.

Zur Erfassung von dem Fahrzeug 10 vorgelagerten Objekten 26 (z.B. Personen, Hindernisse) umfasst das landwirtschaftliche Fahrzeug 10 wenigstens eine erste Sensoreinrichtung 50. Wobei die erste Sensoreinrichtung 50 somit zweckmäßig eine Umfeldsensorik bildet.

Zur Erfassung von wenigstens einer Reihe 28 eines Pflanzenbestand umfasst das Fahrzeug 10 zudem eine zweite Sensoreinrichtung 52.

Zur Erfassung von einer Ist-Position und/oder zur Vorgabe einer Soll-Position des Fahrzeuges 10, bspw. auf einer landwirtschaftlichen Fläche 14, ist es zudem möglich, dass das Fahrzeug 10 eine dritte Sensoreinrichtung 54 umfasst.

Um ein landwirtschaftliches Fahrzeug 10 zu schaffen, mit dem positionsgenaue Arbeitsprozesse durchgeführt werden können ist erfindungsgemäß vorgesehen, dass die Steuereinrichtung 110 eingerichtet ist, Steuer- und/oder Regelsignale für das Fahrbewegungssystem 100 vorrangig von Signalen der ersten Sensoreinrichtung 50 zu Signalen der zweiten Sensoreinrichtung 52 bereitzustellen.

Die Steuereinrichtung 110 kann erfindungsgemäß zweckmäßig dazu eingerichtet sein, Steuer- und/oder Regelsignale für das Fahrbewegungssystem 100 vorrangig von Signalen der ersten Sensoreinrichtung 50 und von Signalen der zweiten Sensoreinrichtung 52 zu Signalen der dritten Sensoreinrichtung 54 bereitzustellen.

Die Steuereinrichtung 100 kann optimal zudem dazu eingerichtet sein, Steuer- und/oder Regelsignale für das Fahrbewegungssystem 100 vorrangig von Signalen der zweiten Sensoreinrichtung 52 zu Signalen der dritten Sensoreinrichtung 54 bereitzustellen und/oder vorrangig von Signalen der ersten 50 Sensoreinrichtung zu Signalen der dritten Sensoreinrichtung 52 bereitzustellen.

Eine vorrangiges heranziehen von Signalen der Sensoreinrichtungen 50; 52; 54; 54 kann bspw. durch eine Zuordnung einer höheren Priorität und/oder einer relevanteren Priorität erfolgen. Wobei die Prioritäten in der Steuereinrichtung 110 hinterlegt sein können, was gemäß der Figuren 2A und 2B durch einen Pfeil und die Buchstaben N=niedrig und H=hoch beispielhaft dargestellt ist.

Zur Durchführung von landwirtschaftlichen Prozessen, gemäß der Figur 1 zur Bodenbearbeitung, ist es möglich, dass am landwirtschaftlichen Fahrzeug 10 Arbeitswerkzeuge 12 angebracht sind (gemäß der Figur 1 bspw. Hackwerkzeuge) welche bspw. mittels einer Stelleinrichtung (z.B. ein oder mehrere hier nicht dargestellte Zylinder, Antriebe, Ventile und/oder dergl.) aktivierbar, deaktivierbar und/oder parametrisierbar sind, wobei wiederum die Steuereinrichtung 110 eingerichtet ist, Steuer- und/oder Regelsignale zur Aktivierung, Deaktivierung und/oder Parametrisierung für die Stelleinrichtung bereitzustellen.

Gemäß einer alternativen oder ergänzenden Ausführungsvariante der Erfindung kann vorgesehen sein, dass die Steuereinrichtung 110 eingerichtet ist, Steuer- und/oder Regelsignale zur Aktivierung der Stelleinrichtung ausschließlich bereitzustellen, wenn eine Bereitstellung von Steuer- und/oder Regelsignalen für das Fahrbewegungssystem 100 anhand von Signalen der zweiten Sensoreinrichtung 52 (d.h. wenn das Fahrzeug 10 entlang einer Reihe 26 eines Pflanzenbestand bewegt wird) erfolgt und Steuer- und/oder Regelsignale zur Deaktivierung der Stelleinrichtung bereitzustellen, wenn eine Bereitstellung von Steuer- und/oder Regelsignalen für das Fahrbewegungssystem 100 anhand von Signalen der ersten Sensoreinrichtung 50 und/oder der dritten Sensoreinrichtung 52 (d.h. wenn das Fahrzeug 10 nicht entlang einer Reihe 26 eines Pflanzenbestand bewegt wird, oder wenn ein Objekt 26 sich im Bewegungsbereich des Fahrzeug 10 befindet) erfolgt.

Eine bevorzugte Ausführungsvariante der Erfindung kann vorsehen, dass das landwirtschaftliche Fahrzeug 10 zumindest eine vierte Sensoreinrichtung 56 aufweist, welche vorzugsweise zur Erfassung der Funktion der Arbeitswerkzeuge 12 und/oder der Stelleinrichtung eingerichtet ist.

Um zu ermöglichen, dass bspw. eine Bedienperson bei gefahrbringenden Bewegungen das Fahrzeug und/oder die Arbeitswerkzeuge 12 zum Stillstand bringen kann und/oder in einen nicht gefahrbringenden Zustand bringen kann, ist am Fahrzeug 10, respektive ist die Steuereinrichtung 110, mit einer Not-Halt-Einrichtung 30 (z.B. Not-Aus-Schalter) gekoppelt. Wobei die Steuereinrichtung 100 eingerichtet ist, Steuer- und/oder Regelsignale für das Fahrbewegungssystem 100 vorranging von Signalen der Not-Halt-Einrichtung 30 zu Signalen der Sensoreinrichtungen 50; 52; 54 bereitzustellen, vorzugsweise vorrangig von Signalen der Not-Halt-Einrichtung 30 zu Signalen der ersten Sensoreinrichtung 50, der zweiten Sensoreinrichtung 52 und/oder der dritten Sensoreinrichtung 54, bereitzustellen. Zudem ist es möglich, dass die Steuereinrichtung 110 eingerichtet ist, Steuer- und/oder Regelsignale für das Fahrbewegungssystem 100 vorranging von Signalen der Not-Halt-Einrichtung 30 zu Signalen der vierten Sensoreinrichtungen 56 bereitzustellen.

Gemäß den Ausführungsbeispielen sind die Reihen 28 eines Pflanzenbestand durch Pflanzen definiert, könnten jedoch alternativ oder ergänzend auch durch Saatkörner definiert sein, durch Bodenstrukturen und/oder durch von im Positionsbestimmungssystem bereitgestellter Daten definiert sein.

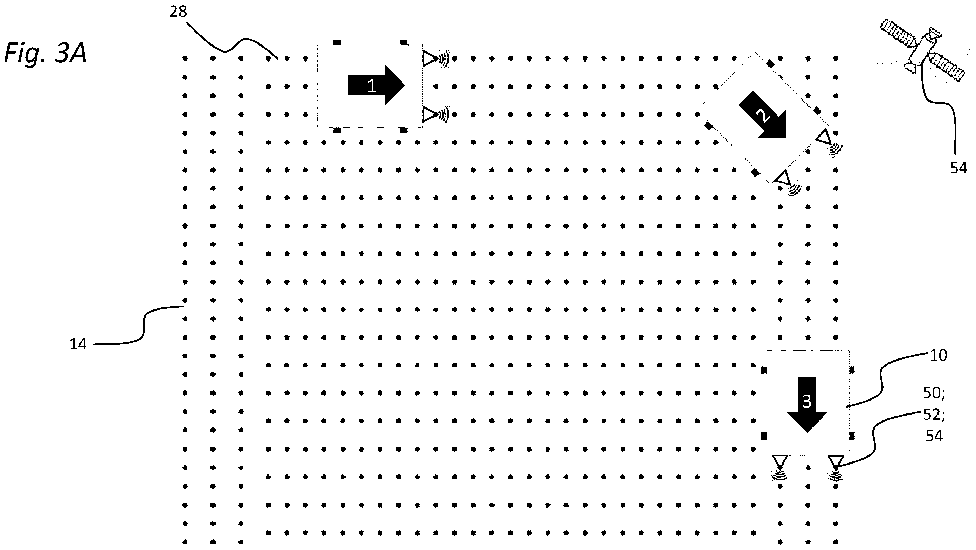

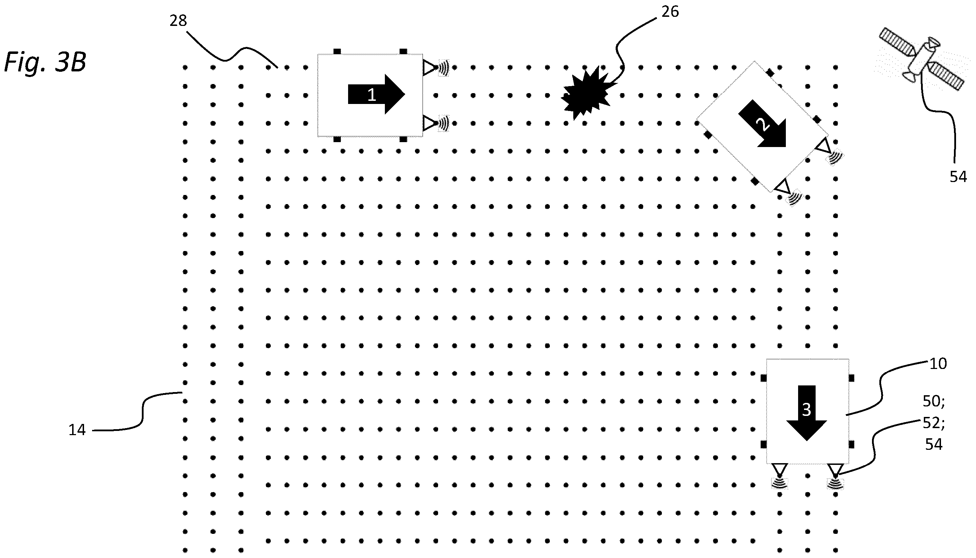

Weitere Details eines mittels der Erfindung möglichen Bewegungsablaufes und eines möglichen Verfahrensablaufs mittels des landwirtschaftlichen Fahrzeugs 10 gehen aus den Figur 3A und 3B hervor.

Auf dem landwirtschaftlichen Fahrzeug 10 ist jeweils ein Richtungspfeil eingezeichnet, der die Fahrtrichtung des Fahrzeugs 10 anzeigt. Der Richtungspfeil ist zudem mit Positionsnummern von 1 bis 3 gekennzeichnet auf welche sich die nachfolgende Beschreibung bezieht.

Das Fahrzeug 10 umfasst jeweils zumindest eine erste Sensoreinrichtung 50, welche vorzugsweise zur Erfassung von dem Fahrzeug 10 vorgelagerten Objekten 26 eingerichtet ist. Zudem umfasst das Fahrzeug 10 zumindest eine zweite Sensoreinrichtung 52, welche vorzugsweise zur Erfassung von wenigstens einer Reihe 28 eines Pflanzenbestand eingerichtet ist.

Solange lediglich die zweite Sensoreinrichtung 52 Signale, vorzugsweise Soll-Signale, bereitstellt, erfolgt die Bewegung, das heißt die Bereitstellung der Steuer- und/oder Regelsignale für das Fahrbewegungssystem 100, des Fahrzeugs 10 bei Position 1 und bei Position 3 anhand der Signale der zweiten Sensoreinrichtung 52. Erfolgt jedoch, mittels der ersten Sensoreinrichtung 50 eine Erfassung eine Objekts 26, bspw. eine Abweichung eines Soll-Signal der ersten Sensoreinrichtung 50, ist die Steuereinrichtung 100 eingerichtet, Steuer- und/oder Regelsignale für das Fahrbewegungssystem 100 vorrangig von Signalen der ersten Sensoreinrichtung 50 zu Signalen der zweiten Sensoreinrichtung 52 bereitzustellen, was gemäß der Figur 3B bspw. einem stillsetzen des Fahrzeug 10 entsprechen kann. Sobald das Objekt 26 mittels der ersten Sensoreinrichtung 50 nicht mehr erfasst wird, und die zweite Sensoreinrichtung 52 eine Reihe 28 eines Pflanzenbestand erfasst, ist die Steuereinrichtung 110 wieder eingerichtet Steuer- und/oder Regelsignale für das Fahrbewegungssystem 100 anhand von Signalen der zweiten Sensoreinrichtung 52 bereitzustellen.

Um eine Ist-Position des Fahrzeuges 10 zu erfassen und/oder eine Soll-Position des Fahrzeuges 10 vorzugeben, ist es zudem möglich, dass das Fahrzeug 10 eine dritte Sensoreinrichtung 54 umfasst. Wobei die dritte Sensoreinrichtung 54 bspw. ein Sattelitengestütztes Positionsbestimmungssystem sein kann. Mittels der dritten Sensoreinrichtung 54 kann zweckmäßig insbesondere eine Kontrolle erfolgen, ob eine Ist-Position einer geforderten Position, das heißt einer Soll-Position zumindest annähernd entspricht. Dies kann bspw. der Fall sein im Bereich der Positionsnummern 1 und 3. Alternativ oder ergänzend kann eine Bewegung des Fahrzeugs 10, wenn bspw. weder die erste Sensoreinrichtung 50 noch die zweite Sensoreinrichtung 52 ein entsprechendes Signal liefert, anhand der Signale der dritten Sensoreinrichtung 54 erfolgen, dies kann bspw. bei Kurvenfahrten der Fall sein, wie dies mit Positionsnummer 2 angedeutet ist. Dies kann aber bspw. auch der Fall sein, wenn sich eine Richtung der Reihe 28 des Pflanzenbestand bspw. beim Annähern an ein Vorgewende ändert. Auch kann dies der Fall sein, bei der Verwendung eines Planungstools zur Vorgabe der Routen des Fahrzeugs 10.

Erfindungsgemäß ist es somit möglich, dass die Steuereinrichtung 100 eingerichtet ist, zur Bereitstellung von Steuer- und/oder Regelsignalen jeweils die Signale der Sensoreinrichtung (z.B. der zweiten Sensoreinrichtung 52 und/oder der dritten Sensoreinrichtung 54) heranzuziehen, mittels der eine möglichst exakte Bewegung des Fahrzeugs 10 erreicht werden kann, bspw. vorranging anhand von Reihen 28 eines Pflanzenbestand (und somit der zweiten Sensoreinrichtung 52) gegenüber einem Positionsbestimmungssystem (und somit der dritten Sensoreinrichtung 54). Wobei unabhängig von den Signalen der Reihen 28 eines Pflanzenbestand (und somit der zweiten Sensoreinrichtung 52) und einem Positionsbestimmungssystem (und somit der dritten Sensoreinrichtung 54) bei einer Erfassung eines Objekts 26 im Bewegungsbereich des Fahrzeugs 10 eine Bereitstellung der Steuer- und/oder Regelsignale für das Fahrbewegungssystem 100 vorrangig anhand des erfassten Objekt 26 (und somit der ersten Sensoreinrichtung 50) erfolgt.

Zur Erreichung einer möglichst großen Schlagkraft mittels dem landwirtschaftlichen Fahrzeug 10 ist es möglich, dass die Steuereinrichtung 110 eingerichtet ist, Steuer- und/oder Regelsignale für das Fahrbewegungssystem 100 in einem ersten Betriebsmodus vorrangig von Signalen der vierten Sensoreinrichtung 56 zu Signalen der zweiten Sensoreinrichtung 52 und der dritten Sensoreinrichtung 54 bereitzustellen. Somit kann bspw. anhand der Signale der vierten Sensoreinrichtung 56 eine Fahrgeschwindigkeit vorgegeben werden oder es können Lenkbewegungen vorgegeben werden, insbesondere derartig, dass die Arbeitswerkzeuge 12 eine gewünschtes Prozessergebnis erfüllen, was entsprechend bspw. mittels der vierten Sensoreinrichtung erfasst werden kann.

Um jedoch dennoch keine ungewünschten oder gefahrbringende Bewegungen des Fahrzeug 10 zu verursachen ist es zudem möglich, dass die Steuereinrichtung 110 eingerichtet ist, Steuer- und/oder Regelsignale für das Fahrbewegungssystem 100 in einem zweiten Betriebsmodus, vorranging von Signalen der ersten Sensoreinrichtung 50 und/oder der zweiten Sensoreinrichtung 52 und/oder der dritten Sensoreinrichtung 54 zu Signalen der vierten Sensoreinrichtung 56 bereitzustellen. Wobei ein Wechsel des ersten Betriebsmodus in den zweiten Betriebsmodus mittels der Steuereinrichtung 110 initiiert werden kann, bspw. durch von Soll-Signalen abweichende Ist-Signale der ersten Sensoreinrichtung 50 (somit bspw. bei einer Erfassung eines Objekt 26) und/oder durch von Soll-Signalen abweichende Ist-Signale der zweiten Sensoreinrichtung 52 (somit bspw. wenn keine Reihe 28 eines Pflanzenbestand erfasst wird) und/oder durch von Soll-Positionen abweichende Ist-Positionen der dritten Sensoreinrichtung 54 (somit bspw. wenn das Positionsbestimmungssystem eine nicht in einem gewünschten Bereich liegende Position erfasst).

### Bezugszeichenliste:

- 10: Fahrzeug
- 12: Arbeitswerkzeug
- 14: Fläche
- 16: Chassis
- 18: Fahrwerk
- 20: Räder
- 22: Lenkaktor
- 24: Motor
- 26: Objekt
- 28: Reihe
- 30: Not-Halt-Einrichtung

- 50: erste Sensoreinrichtung
- 52: zweite Sensoreinrichtung
- 54: dritte Sensoreinrichtung
- 56: vierte Sensoreinrichtung

- 100: Fahrbewegungssystem
- 110: Steuereinrichtung

## Patentansprüche

1. Landwirtschaftliches Fahrzeug (10), vorzugsweise autonomes landwirtschaftliches Fahrzeug (10), zumindest mit,
- einem Chassis (16) mit einem Fahrwerk (18), welches mit einem Fahrbewegungssystem (100) zur vorzugsweisen Vorgabe von Fahrgeschwindigkeiten und von Lenkbewegungen gekoppelt ist,
- einer Steuereinrichtung (110) zur Bereitstellung von Steuer- und/oder Regelsignalen für das Fahrbewegungssystem (100),
- einer ersten Sensoreinrichtung (50), welche zur Erfassung von dem Fahrzeug (10) vorgelagerten Objekten (26) eingerichtet ist, **gekennzeichnet durch**
- eine zweite Sensoreinrichtung (52), welche zur Erfassung von wenigstens einer Reihe (28) eines Pflanzenbestands eingerichtet ist,
wobei die Steuereinrichtung (110) eingerichtet ist, Steuer- und/oder Regelsignale für das Fahrbewegungssystem (100) vorrangig von Signalen der ersten Sensoreinrichtung (50) zu Signalen der zweiten Sensoreinrichtung (52) bereitzustellen,
wobei
das landwirtschaftliche Fahrzeug (10) zumindest
- eine dritte Sensoreinrichtung (54) aufweist, welche zur Erfassung einer Ist-Position und/oder zur Vorgabe einer Soll-Position des Fahrzeugs (10) auf einer landwirtschaftlichen Fläche (14) eingerichtet ist,
wobei die Steuereinrichtung (110) ferner eingerichtet ist, Steuer- und/oder Regelsignale für das Fahrbewegungssystem (100) vorrangig von Signalen der ersten Sensoreinrichtung (50) und von Signalen der zweiten Sensoreinrichtung (52) zu Signalen der dritten Sensoreinrichtung (54) bereitzustellen.

2. Landwirtschaftliches Fahrzeug (10), nach Anspruch 1, **dadurch gekennzeichnet, dass** die Steuereinrichtung (110) ferner eingerichtet ist, Steuer- und/oder Regelsignale für das Fahrbewegungssystem (100)
- vorrangig von Signalen der zweiten Sensoreinrichtung (52) zu Signalen der dritten Sensoreinrichtung (54) bereitzustellen und/oder
- vorrangig von Signalen der ersten Sensoreinrichtung (52) zu Signalen der dritten Sensoreinrichtung (54) bereitstellen.

3. Landwirtschaftliches Fahrzeug (10), nach Anspruch 1 oder 2, **dadurch gekennzeichnet, dass** die Steuereinrichtung (110) ferner eingerichtet ist,
- einen Wechsel der für die Bereitstellung verwendeten Signale der Sensoreinrichtungen (50; 52; 54; 56), vorzugsweise der ersten Sensoreinrichtung (50), der zweiten Sensoreinrichtung (52) und/oder der dritten Sensoreinrichtung (54), automatisiert auszuführen.

4. Landwirtschaftliches Fahrzeug (10) nach Anspruch 3, **dadurch gekennzeichnet, dass** ein automatisiertes Ausführen erfolgt anhand eines mittels der Steuereinrichtung (110) durchgeführten Vergleich von
- vorzugsweise mittels der ersten Sensoreinrichtung (50) und/oder der zweiten Sensoreinrichtung (52), erfassten Ist-Signalen mit Soll-Signalen, und/oder
- vorzugsweise mittels der dritten Sensoreinrichtung (54), erfassten Ist-Positionen mit Soll-Positionen.

5. Landwirtschaftliches Fahrzeug (10), nach einem der vorherigen Ansprüche, **dadurch gekennzeichnet, dass** in der Steuereinrichtung (110) hinterlegt und/oder hinterlegbar sind,
- Soll-Signale für die erste Sensoreinrichtung (50) und/oder
- Soll-Signale für die zweite Sensoreinrichtung (52) und/oder
- Soll-Positionen für die dritte Sensoreinrichtung (54).

6. Landwirtschaftliches Fahrzeug (10), nach Anspruch 5, **dadurch gekennzeichnet, dass** die Steuereinrichtung (110) ferner eingerichtet ist, Steuer- und/oder Regelsignale für das Fahrbewegungssystem (100) derartig bereitzustellen, dass
- durch von Soll-Signalen abweichende Ist-Signale der ersten Sensoreinrichtung (50) unabhängig von Ist-Signalen der zweiten Sensoreinrichtung (52) und von Ist-Positionen der dritten Sensoreinrichtung (54) ein Stillstand des Fahrzeugs (10) initiiert wird.

7. Landwirtschaftliches Fahrzeug (10), nach Anspruch 5 oder 6, **dadurch gekennzeichnet, dass** die Steuereinrichtung (110) ferner eingerichtet ist, Steuer- und/oder Regelsignale für das Fahrbewegungssystem (100) derartig bereitzustellen, dass
- durch von Soll-Signalen abweichende Ist-Signale der zweiten Sensoreinrichtung (52) Fahrgeschwindigkeiten und Lenkbewegungen anhand von Ist-Positionen und/oder Soll-Positionen der dritten Sensoreinrichtung (54) initiiert werden, insbesondere anhand von durch ein Planungstool bereitgestellten Arbeitsanweisungen initiiert werden.

8. Landwirtschaftliches Fahrzeug (10), nach einem der Ansprüche 5 bis 7, **dadurch gekennzeichnet, dass** die Steuereinrichtung (110) ferner eingerichtet ist, Steuer- und/oder Regelsignale für das Fahrbewegungssystem (100) derartig bereitzustellen, dass
- vorzugsweise unabhängig von Ist-Signalen und/oder Soll-Signalen der zweiten Sensoreinrichtung (52),
- durch von Soll-Positionen abweichende Ist-Positionen der dritten Sensoreinrichtung (54) ein Stillstand des Fahrzeugs (10) initiiert wird.

9. Landwirtschaftliches Fahrzeug (10), nach einem der vorherigen Ansprüche, **dadurch gekennzeichnet, dass**
- das landwirtschaftliche Fahrzeug (10) mit Arbeitswerkzeugen (12) gekoppelt ist, welche mittels einer Stelleinrichtung aktvierbar, deaktivierbar und/oder parametrisierbar sind,
- wobei die Steuereinrichtung (110) eingerichtet ist, Steuer- und/oder Regelsignale zur Aktivierung, Deaktivierung und/oder Parametrisierung für die Stelleinrichtung bereitzustellen.

10. Landwirtschaftliches Fahrzeug (10) nach Anspruch 9, **dadurch gekennzeichnet, dass** die Steuereinrichtung (110) ferner eingerichtet ist,
- Steuer- und/oder Regelsignale zur Aktivierung der Stelleinrichtung ausschließlich bereitzustellen, wenn eine Bereitstellung von Steuer- und/oder Regelsignalen für das Fahrbewegungssystem (100) anhand von Signalen der zweiten Sensoreinrichtung (52) erfolgt und
- Steuer- und/oder Regelsignale zur Deaktivierung der Stelleinrichtung bereitzustellen, wenn eine Bereitstellung von Steuer- und/oder Regelsignalen für das Fahrbewegungssystem (100) anhand von Signalen der ersten Sensoreinrichtung (50) und/oder der dritten Sensoreinrichtung (54) erfolgt.

11. Landwirtschaftliches Fahrzeug (10) nach Anspruch 9, **dadurch gekennzeichnet, dass** das landwirtschaftliche Fahrzeug (10) zumindest
- eine vierte Sensoreinrichtung (56) aufweist, welche vorzugsweise zur Erfassung der Funktion der Arbeitswerkzeuge (12) und/oder der Stelleinrichtung eingerichtet ist.

12. Landwirtschaftliches Fahrzeug (10) nach Anspruch 11, **dadurch gekennzeichnet, dass** die Steuereinrichtung (110) ferner eingerichtet ist, Steuer- und/oder Regelsignale für das Fahrbewegungssystem (100)
- in einem ersten Betriebsmodus vorrangig von Signalen der vierten Sensoreinrichtung (56) zu Signalen der zweiten Sensoreinrichtung (52) und der dritten Sensoreinrichtung (54) bereitzustellen und/oder
- in einem zweiten Betriebsmodus, vorranging von Signalen der ersten Sensoreinrichtung (50) und/oder der zweiten Sensoreinrichtung (52) und/oder der dritten Sensoreinrichtung (54) zu Signalen der vierten Sensoreinrichtung (56) bereitzustellen.

13. Landwirtschaftliches Fahrzeug (10) nach Anspruch 12, **dadurch gekennzeichnet, dass** ein Wechsel des ersten Betriebsmodus in den zweiten Betriebsmodus mittels der Steuereinrichtung (110) initiiert wird durch,
- von Soll-Signalen abweichende Ist-Signale der ersten Sensoreinrichtung (50) und/oder
- von Soll-Signalen abweichende Ist-Signale der zweiten Sensoreinrichtung (52) und/oder
- von Soll-Positionen abweichende Ist-Positionen der dritten Sensoreinrichtung (54).

14. Landwirtschaftliches Fahrzeug (10) nach einem der vorherigen Ansprüche, **dadurch gekennzeichnet, dass** die Steuereinrichtung (110) mit einer Not-Halt-Einrichtung (30) gekoppelt ist, wobei die Steuereinrichtung (110) ferner eingerichtet ist, Steuer- und/oder Regelsignale für das Fahrbewegungssystem (100) vorranging von Signalen der Not-Halt-Einrichtung (30) zu Signalen der Sensoreinrichtungen (50; 52; 54; 56) bereitzustellen, vorzugsweise vorrangig von Signalen der Not-Halt-Einrichtung (30) zu Signalen der ersten Sensoreinrichtung (50), der zweiten Sensoreinrichtung (52) und/oder der dritten Sensoreinrichtung (54), bereitzustellen.

15. Verfahren zum Steuern und/oder Regeln eines Fahrbewegungssystem (100) eines landwirtschaftlichen Fahrzeugs (10), vorzugsweise eines autonomen landwirtschaftlichen Fahrzeugs (10), mit
- einem Chassis (16) mit einem Fahrwerk (18), welches mit einem Fahrbewegungssystem (100) zur vorzugsweisen Vorgabe von Fahrgeschwindigkeiten und von Lenkbewegungen gekoppelt ist,
- einer Steuereinrichtung (110) zur Bereitstellung von Steuer- und/oder Regelsignalen für das Fahrbewegungssystem (100),
- zumindest einer ersten Sensoreinrichtung (50), welche zur Erfassung von dem Fahrzeug (10) vorgelagerten Objekten (16) eingerichtet ist, **gekennzeichnet durch**
- zumindest eine zweite Sensoreinrichtung (52), welche zur Erfassung von wenigstens einer Reihe (28) eines Pflanzenbestands eingerichtet ist,
wobei das Verfahren ein Bereitstellen von Steuer- und/oder Regelsignalen für das Fahrbewegungssystem (100) vorrangig von Signalen der ersten Sensoreinrichtung (50) zu Signalen der zweiten Sensoreinrichtung (52) umfasst,
wobei
das landwirtschaftliche Fahrzeug (10) zumindest,
- eine dritte Sensoreinrichtung (54) aufweist, welche zur Erfassung einer Ist-Position und/oder zur Vorgabe einer Soll-Position des Fahrzeug (10) auf einer landwirtschaftlichen Fläche (14) eingerichtet ist,
wobei die Steuereinrichtung (110) eingerichtet ist, Steuer- und/oder Regelsignale für das Fahrbewegungssystem (100) vorrangig von Signalen der ersten Sensoreinrichtung (50) und von Signalen der zweiten Sensoreinrichtung (52) zu Signalen der dritten Sensoreinrichtung (54) bereitzustellen.

16. Verfahren nach Anspruch 15, **dadurch gekennzeichnet, dass** die Steuereinrichtung (110) ferner eingerichtet ist, Steuer- und/oder Regelsignale für das Fahrbewegungssystem (100)
- vorrangig von Signalen der zweiten Sensoreinrichtung (52) zu Signalen der dritten Sensoreinrichtung (54) bereitzustellen und/oder
- vorrangig von Signalen der ersten Sensoreinrichtung (52) zu Signalen der dritten Sensoreinrichtung (54) bereitzustellen.

17. Verfahren nach einem der Ansprüche 15 oder 16, **dadurch gekennzeichnet, dass**
- das landwirtschaftliche Fahrzeug (10) mit Arbeitswerkzeugen (12) gekoppelt ist, welche mittels einer Stelleinrichtung aktvierbar, deaktivierbar und/oder parametrisierbar sind,
- wobei die Steuereinrichtung (110) eingerichtet ist, Steuer- und/oder Regelsignale zur Aktivierung, Deaktivierung und/oder Parametrisierung für die Stelleinrichtung bereitzustellen und
- wobei die Steuereinrichtung (110) eingerichtet ist,
- Steuer- und/oder Regelsignale zur Aktivierung der Stelleinrichtung ausschließlich bereitzustellen, wenn eine Bereitstellung von Steuer- und/oder Regelsignalen für das Fahrbewegungssystem (100) anhand von Signalen der zweiten Sensoreinrichtung (52) erfolgt und
- Steuer- und/oder Regelsignale zur Deaktivierung der Stelleinrichtung bereitzustellen, wenn eine Bereitstellung von Steuer- und/oder Regelsignalen für das Fahrbewegungssystem (100) anhand von Signalen der ersten Sensoreinrichtung (50) und/oder der dritten Sensoreinrichtung (54) erfolgt.

## Claims

1. An agricultural vehicle (10), preferably an autonomous agricultural vehicle (10), comprising at least
- a chassis (16) having an undercarriage (18) coupled to a driving motion system (100) for preferably specifying speeds of travel and steering movements,
- a control device (110) for providing open-loop and/or closed-loop control signals for the driving motion system (100),
- a first sensor device (50) configured for detecting objects (26) in front of the vehicle (10), **characterized by**
- a second sensor device (52) configured for detecting at least one row (28) of a plant stock,
wherein the control device (110) is configured to provide open-loop and/or closed-loop control signals for the driving motion system (100) from signals from the first sensor device (50) in priority over signals from the second sensor device (52),
wherein
the agricultural vehicle (10) comprises at least
- one third sensor device (54) configured for detecting an actual position and/or for specifying a setpoint position of the vehicle (10) on an agricultural area (14),
wherein the control device (110) is furthermore configured to provide open-loop and/or closed-loop control signals for the driving motion system (100) from signals from the first sensor device (50) and from signals from the second sensor device (52) in priority over signals from the third sensor device (54).

2. The agricultural vehicle (10) according to Claim 1, **characterized in that** the control device (110) is furthermore configured to provide open-loop and/or closed-loop control signals for the driving motion system (100)
- from signals from the second sensor device (52) in priority over signals from the third sensor device (54) and/or
- from signals from the first sensor device (52) in priority over signals from the third sensor device (54).

3. The agricultural vehicle (10) according to Claim 1 or 2, **characterized in that** the control device (110) is furthermore configured
- to execute a change of signals used for provision from the sensor devices (50; 52; 54; 56), preferably from the first sensor device (50), the second sensor device (52) and/or the third sensor device (54), in automated fashion.

4. The agricultural vehicle (10) according to Claim 3, **characterized in that** automated execution is performed on the basis of a comparison, carried out by means of the control device (110), of
- actual signals, preferably detected by means of the first sensor device (50) and/or the second sensor device (52), with setpoint signals, and/or
- actual positions, preferably detected by means of the third sensor device (54), with setpoint positions.

5. The agricultural vehicle (10) according to one of the preceding claims, **characterized in that** the control device (110) stores and/or is able to store
- setpoint signals for the first sensor device (50) and/or
- setpoint signals for the second sensor device (52) and/or
- setpoint positions for the third sensor device (54).

6. The agricultural vehicle (10) according to Claim 5, **characterized in that** the control device (110) is furthermore configured to provide open-loop and/or closed-loop control signals for the driving motion system (100) in such a way that
- actual signals from the first sensor device (50) that deviate from setpoint signals initiate a standstill for the vehicle (10) regardless of actual signals from the second sensor device (52) and actual positions from the third sensor device (54).

7. The agricultural vehicle (10) according to Claim 5 or 6, **characterized in that** the control device (110) is furthermore configured to provide open-loop and/or closed-loop control signals for the driving motion system (100) in such a way that
- actual signals from the second sensor device (52) that deviate from setpoint signals initiate speeds of travel and steering movements on the basis of actual positions and/or setpoint positions from/for the third sensor device (54), in particular on the basis of work instructions provided by a planning tool.

8. The agricultural vehicle (10) according to one of Claims 5 to 7, **characterized in that** the control device (110) is furthermore configured to provide open-loop and/or closed-loop control signals for the driving motion system (100) in such a way that
- preferably regardless of actual signals and/or setpoint signals from/for the second sensor device (52),
- actual positions from the third sensor device (54) that deviate from setpoint positions initiate a standstill for the vehicle (10).

9. The agricultural vehicle (10) according to one of the preceding claims, **characterized in that**
- the agricultural vehicle (10) is coupled to work tools (12) that are able to be activated, deactivated and/or parametrized by means of an actuator,
- wherein the control device (110) is configured to provide open-loop and/or closed-loop control signals for activation, deactivation and/or parametrization for the actuator.

10. The agricultural vehicle (10) according to Claim **9, characterized in that** the control device (110) is furthermore configured
- to provide open-loop and/or closed-loop control signals for activating the actuator only when open-loop and/or closed-loop control signals for the driving motion system (100) are provided on the basis of signals from the second sensor device (52), and
- to provide open-loop and/or closed-loop control signals for deactivating the actuator when open-loop and/or closed-loop control signals for the driving motion system (100) are provided on the basis of signals from the first sensor device (50) and/or the third sensor device (54).

11. The agricultural vehicle (10) according to Claim **9, characterized in that** the agricultural vehicle (10) comprises at least
- one fourth sensor device (56) preferably configured for detecting the operation of the work tools (12) and/or the actuator.

12. The agricultural vehicle (10) according to Claim 11, **characterized in that** the control device (110) is furthermore configured to provide open-loop and/or closed-loop control signals for the driving motion system (100)
- from signals from the fourth sensor device (56) in priority over signals from the second sensor device (52) and the third sensor device (54) in a first operating mode, and/or
- from signals from the first sensor device (50) and/or the second sensor device (52) and/or the third sensor device (54) in priority over signals from the fourth sensor device (56) in a second operating mode.

13. The agricultural vehicle (10) according to Claim 12, **characterized in that** a change from the first operating mode to the second operating mode by means of the control device (110) is initiated by
- actual signals from the first sensor device (50) that deviate from setpoint signals and/or
- actual signals from the second sensor device (52) that deviate from setpoint signals and/or
- actual positions from the third sensor device (54) that deviate from setpoint positions.

14. The agricultural vehicle (10) according to one of the preceding claims, **characterized in that** the control device (110) is coupled to an emergency stop device (30), wherein the control device (110) is furthermore configured to provide open-loop and/or closed-loop control signals for the driving motion system (100) from signals from the emergency stop device (30) in priority over signals from the sensor devices (50; 52; 54; 56), preferably from signals from the emergency stop device (30) in priority over signals from the first sensor device (50), the second sensor device (52) and/or the third sensor device (54).

15. A method for performing open-loop and/or closed-loop control of a driving motion system (100) of an agricultural vehicle (10), preferably an autonomous agricultural vehicle (10), comprising
- a chassis (16) having an undercarriage (18) coupled to a driving motion system (100) for preferably specifying speeds of travel and steering movements,
- a control device (110) for providing open-loop and/or closed-loop control signals for the driving motion system (100),
- at least one first sensor device (50) configured for detecting objects (16) in front of the vehicle (10), **characterized by**
- at least one second sensor device (52) configured for detecting at least one row (28) of a plant stock, wherein the method comprises providing open-loop and/or closed-loop control signals for the driving motion system (100) from signals from the first sensor device (50) in priority over signals from the second sensor device (52), wherein
the agricultural vehicle (10) comprises at least
- one third sensor device (54) configured for detecting an actual position and/or for specifying a setpoint position of the vehicle (10) on an agricultural area (14),
wherein the control device (110) is configured to provide open-loop and/or closed-loop control signals for the driving motion system (100) from signals from the first sensor device (50) and from signals from the second sensor device (52) in priority over signals from the third sensor device (54).

16. The method according to Claim 15, **characterized in that** the control device (110) is furthermore configured to provide open-loop and/or closed-loop control signals for the driving motion system (100)
- from signals from the second sensor device (52) in priority over signals from the third sensor device (54) and/or
- from signals from the first sensor device (52) in priority over signals from the third sensor device (54).

17. The method according to either of Claims 15 and 16, **characterized in that**
- the agricultural vehicle (10) is coupled to work tools (12) that are able to be activated, deactivated and/or parametrized by means of an actuator,
- wherein the control device (110) is configured to provide open-loop and/or closed-loop control signals for activation, deactivation and/or parametrization for the actuator and
- wherein the control device (110) is configured
- to provide open-loop and/or closed-loop control signals for activating the actuator only when open-loop and/or closed-loop control signals for the driving motion system (100) are provided on the basis of signals from the second sensor device (52), and
- to provide open-loop and/or closed-loop control signals for deactivating the actuator when open-loop and/or closed-loop control signals for the driving motion system (100) are provided on the basis of signals from the first sensor device (50) and/or the third sensor device (54).

## Revendications

1. Véhicule agricole (10), de préférence véhicule agricole autonome (10), comprenant au moins
- un châssis (16) pourvu d'un train de roulement (18), qui est couplé à un système de déplacement (100) destiné à prédéfinir de préférence des vitesses de déplacement et des mouvements de direction,
- un dispositif de commande (110) permettant de fournir des signaux de commande et/ou de régulation destinés au système de déplacement (100),
- un premier dispositif capteur (50), qui est conçu pour détecter des objets (26) placés à l'avant du véhicule (10), **caractérisé par**
- un deuxième dispositif capteur (52), qui est conçu pour détecter au moins une rangée (28) d'un couvert végétal,
le dispositif de commande (110) étant conçu pour fournir des signaux de commande et/ou de régulation destinés au système de déplacement (100), en donnant la priorité à des signaux provenant du premier dispositif capteur (50) par rapport à des signaux provenant du deuxième dispositif capteur (52),
dans lequel
le véhicule agricole (10) comporte au moins
- un troisième dispositif capteur (54), qui est conçu pour détecter une position réelle et/ou pour prédéfinir une position de consigne du véhicule (10) sur une surface agricole (14),
le dispositif de commande (110) étant en outre conçu pour fournir des signaux de commande et/ou de régulation destinés au système de déplacement (100) en donnant la priorité à des signaux provenant du premier dispositif capteur (50) et à des signaux provenant du deuxième dispositif capteur (52) par rapport à des signaux provenant du troisième dispositif capteur (54).

2. Véhicule agricole (10) selon la revendication 1, **caractérisé en ce que** le dispositif de commande (110) est en outre conçu pour fournir des signaux de commande et/ou de régulation destinés au système de déplacement (100)
- en donnant la priorité à des signaux provenant du deuxième dispositif capteur (52) par rapport à des signaux provenant du troisième dispositif capteur (54) et/ou
- en donnant la priorité à des signaux provenant du premier dispositif capteur (52) par rapport à des signaux provenant du troisième dispositif capteur (54).

3. Véhicule agricole (10), selon la revendication 1 ou 2, **caractérisé en ce que** le dispositif de commande (110) est en outre conçu pour
- effectuer de manière automatisée un échange des signaux utilisés pour la fourniture, provenant des dispositifs capteurs (50 ; 52 ; 54 ; 56), de préférence du premier dispositif capteur (50), du deuxième dispositif capteur (52) et/ou du troisième dispositif capteur (54).

4. Véhicule agricole (10) selon la revendication 3, **caractérisé en ce qu'**une exécution automatisée est effectuée sur la base d'une comparaison, réalisée au moyen du dispositif de commande (110)
- de signaux de consigne, de préférence détectés au moyen du premier dispositif capteur (50) et/ou du deuxième dispositif capteur (52), avec des signaux réels, et/ou
- de positions réelles, de préférence détectées au moyen du troisième dispositif capteur (54), avec des positions de consigne.

5. Véhicule agricole (10), selon l'une des revendications précédentes, **caractérisé en ce qu'**on enregistre et/ou peut enregistrer dans le dispositif de commande (110),
- des signaux de consigne pour le premier dispositif capteur (50) et/ou
- des signaux de consigne pour le deuxième dispositif capteur (52) et/ou
- des positions de consigne pour le troisième dispositif capteur (54).

6. Véhicule agricole (10) selon la revendication 5, **caractérisé en ce que** le dispositif de commande (110) est en outre conçu pour fournir des signaux de commande et/ou de régulation destinés au système de déplacement (100) de telle sorte que
- un arrêt du véhicule (10) soit déclenché par des signaux réels provenant du premier dispositif capteur (50) s'écartant des signaux de consigne, indépendamment des signaux réels provenant du deuxième dispositif capteur (52) et des positions réelles provenant du troisième dispositif capteur (54).

7. Véhicule agricole (10) selon la revendication 5 ou 6, **caractérisé en ce que** le dispositif de commande (110) est en outre conçu pour fournir des signaux de commande et/ou de régulation destinés au système de déplacement (100) de telle sorte que
- des vitesses de déplacement et des mouvements de direction soient déclenchés par des signaux réels provenant du deuxième dispositif capteur (52) s'écartant des signaux de consigne, sur la base de positions réelles et/ou de positions de consigne provenant du troisième dispositif capteur (54), notamment sur la base d'instructions de travail fournies par un outil de planification.

8. Véhicule agricole (10) selon l'une des revendications 5 à 7, **caractérisé en ce que** le dispositif de commande (110) est en outre conçu pour fournir des signaux de commande et/ou de régulation destinés au système de déplacement (100) de telle sorte qu'un arrêt du véhicule (10) soit déclenché
- de préférence indépendamment de signaux réels et/ou de signaux de consigne provenant du deuxième dispositif capteur (52),
- par des positions réelles provenant du troisième dispositif capteur (54) qui s'écartent des positions de consigne.

9. Véhicule agricole (10) selon l'une des revendications précédentes, **caractérisé en ce que**
- le véhicule agricole (10) est accouplé à des outils de travail (12) qui peuvent être activés, désactivés et/ou paramétrés au moyen d'un dispositif de réglage,
- le dispositif de commande (110) étant conçu pour fournir des signaux de commande et/ou de régulation pour activer, désactiver et/ou paramétrer le dispositif de réglage.

10. Véhicule agricole (10) selon la revendication 9, **caractérisé en ce que** le dispositif de commande (110) est en outre conçu pour
- fournir des signaux de commande et/ou de régulation pour activer le dispositif de réglage exclusivement lorsque la fourniture de signaux de commande et/ou de régulation destinés au système de déplacement (100) est effectuée sur la base de signaux provenant du deuxième dispositif capteur (52) et
- fournir des signaux de commande et/ou de régulation pour désactiver le dispositif de réglage lorsque la fourniture de signaux de commande et/ou de régulation destinés au système de déplacement (100) est effectuée sur la base de signaux provenant du premier dispositif capteur (50) et/ou du troisième dispositif capteur (54).

11. Véhicule agricole (10) selon la revendication 9, **caractérisé en ce que** le véhicule agricole (10) comporte au moins
- un quatrième dispositif capteur (56), qui est de préférence conçu pour détecter le fonctionnement des outils de travail (12) et/ou du dispositif de réglage.

12. Véhicule agricole (10) selon la revendication 11, **caractérisé en ce que** le dispositif de commande (110) est en outre conçu pour fournir des signaux de commande et/ou de régulation destinés au système de déplacement (100)
- dans un premier mode de fonctionnement, en donnant la priorité à des signaux provenant du quatrième dispositif capteur (56) par rapport à des signaux provenant du deuxième dispositif capteur (52) et du troisième dispositif capteur (54), et/ou
- dans un deuxième mode de fonctionnement, en donnant la priorité à des signaux provenant du premier dispositif capteur (50) et/ou du deuxième dispositif capteur (52) et/ou du troisième dispositif capteur (54) par rapport à des signaux provenant du quatrième dispositif capteur (56).

13. Véhicule agricole (10) selon la revendication 12, **caractérisé en ce qu'**un passage du premier mode de fonctionnement au deuxième mode de fonctionnement est déclenché au moyen du dispositif de commande (110) par
- des signaux réels provenant du premier dispositif capteur (50) s'écartant des signaux de consigne et/ou
- des signaux réels provenant du deuxième dispositif capteur (52) s'écartant des signaux de consigne et/ou
- des positions réelles provenant du troisième dispositif capteur (54) s'écartant des positions de consigne.

14. Véhicule agricole (10) selon l'une des revendications précédentes, **caractérisé en ce que** le dispositif de commande (110) est couplé à un dispositif d'arrêt d'urgence (30),
le dispositif de commande (110) étant en outre conçu pour fournir des signaux de commande et/ou de régulation destinés au système de déplacement (100) en donnant la priorité à des signaux provenant du dispositif d'arrêt d'urgence (30) par rapport à des signaux provenant des dispositifs capteurs (50 ; 52 ; 54 ; 56), de préférence en donnant la priorité à des signaux provenant du dispositif d'arrêt d'urgence (30) par rapport à des signaux provenant du premier dispositif capteur (50), du deuxième dispositif capteur (52) et/ou du troisième dispositif capteur (54).

15. Procédé de commande et/ou de régulation d'un système de déplacement (100) d'un véhicule agricole (10), de préférence d'un véhicule agricole autonome (10), comprenant
- un châssis (16) pourvu d'un train de roulement (18), qui est couplé à un système de déplacement (100) destiné à prédéfinir de préférence des vitesses de déplacement et des mouvements de direction,
- un dispositif de commande (110) permettant de fournir des signaux de commande et/ou de régulation destinés au système de déplacement (100),
- au moins un premier dispositif capteur (50), qui est conçu pour détecter des objets (16) placés à l'avant du véhicule (10), **caractérisé par**
- au moins un deuxième dispositif capteur (52), qui est conçu pour détecter au moins une rangée (28) d'un couvert végétal,
le procédé comprenant la fourniture de signaux de commande et/ou de régulation destinés au système de déplacement (100), en donnant la priorité à des signaux provenant du premier dispositif capteur (50) par rapport à des signaux provenant du deuxième dispositif capteur (52),
dans lequel
le véhicule agricole (10) comporte au moins
- un troisième dispositif capteur (54), qui est conçu pour détecter une position réelle et/ou pour prédéfinir une position de consigne du véhicule (10) sur une surface agricole (14),
le dispositif de commande (110) étant conçu pour fournir des signaux de commande et/ou de régulation destinés au système de déplacement (100) en donnant la priorité à des signaux provenant du premier dispositif capteur (50) et à des signaux provenant du deuxième dispositif capteur (52) par rapport à des signaux provenant du troisième dispositif capteur (54).

16. Procédé selon la revendication 15, **caractérisé en ce que** le dispositif de commande (110) est en outre conçu pour fournir des signaux de commande et/ou de régulation destinés au système de déplacement (100)
- en donnant la priorité à des signaux provenant du deuxième dispositif capteur (52) par rapport à des signaux provenant du troisième dispositif capteur (54) et/ou
- en donnant la priorité à des signaux provenant du premier dispositif capteur (52) par rapport à des signaux provenant du troisième dispositif capteur (54).

17. Procédé selon l'une des revendications 15 ou 16, **caractérisé en ce que**
- le véhicule agricole (10) est accouplé à des outils de travail (12) qui peuvent être activés, désactivés et/ou paramétrés au moyen d'un dispositif de réglage,
- le dispositif de commande (110) étant conçu pour fournir des signaux de commande et/ou de régulation pour activer, désactiver et/ou paramétrer le dispositif de réglage, et
- le dispositif de commande (110) étant conçu pour
- fournir des signaux de commande et/ou de régulation pour activer le dispositif de réglage exclusivement lorsque la fourniture de signaux de commande et/ou de régulation destinés au système de déplacement (100) est effectuée sur la base de signaux provenant du deuxième dispositif capteur (52) et
- fournir des signaux de commande et/ou de régulation pour désactiver le dispositif de réglage lorsque la fourniture de signaux de commande et/ou de régulation destinés au système de déplacement (100) est effectuée sur la base de signaux provenant du premier dispositif capteur (50) et/ou du troisième dispositif capteur (54).
